# EUROPEAN PATENT SPECIFICATION

(11) **EP 0 947 389 B1**
(45) Date of publication and mention of the grant of the patent: **06.07.2005**
(21) Application number: 99106445.2
(22) Date of filing: 29.03.1999
(51) Int. Cl.: B60R 16/02

(54) **A short-tape rotary contactor for a motor vehicle**
Dreh-Übertrager für ein Kraftfahrzeug mit verkürztem Flachbandleiter
Contacteur rotatif à ruban court pour véhicule à moteur

(30) Priority: 31.03.1998 FR 9803954
(43) Date of publication of application: 06.10.1999
(73) Proprietor: VALEO ELECTRONIQUE, 94042 Creteil Cédex (FR)
(72) Inventor: Letoumelin, Rémi, 77400 Lagny (FR)
(74) Representative: de la Bigne, Guillaume Michel Marie

(56) References cited:
- EP-A- 0 315 979
- DE-U- 29 515 517
- FR-A- 2 667 457
- FR-A- 2 738 677
- FR-A- 2 753 575
- US-A- 4 867 688
- US-A- 5 314 344

## Description

The present invention relates to rotary contactors having short tapes, for motor vehicles, of the same type as those which are described in the document FR-2753575 A1, corresponding to the preamble of claim 1.

In that document and in FR 2 738 677 A1, the contactor comprises two coaxial parts which are mounted for movement in rotation of one with respect to the other against the action of a flexible electrical connecting tape, which is attached at one of its ends to one of the coaxial parts and at its other end to the other one of the said parts. A device for reduction of rotational movement (or speed reducer), in the form of an epicyclic gear train, is provided, thereby reducing the length of the tape, which is wound in spiral form and which acts between a hub which is comprised in one of the coaxial parts, and a housing which is comprised in the other coaxial part. This train includes a pinion which is adapted to mesh, firstly with an internal set of teeth formed in the housing and adapted to be fixed on a fixed part, such as the fixed tube of the steering column or the support for switches which is mounted under the steering wheel of the vehicle, and secondly, an external set of teeth formed on the hub and adapted to be coupled to the movable steering wheel of the steering column.

Thus, the epicyclic gear train accompanies the movement of the tape, the length of which is reduced.

In one embodiment in that document, the pinion is carried for rotation by an internal rotor which is mounted for rotation on the movable hub and which is contained within the interior of the fixed housing.

This rotor has an axially orientated annular skirt portion for accommodating the tape and winding it around the hub. The skirt portion includes passage means for the tape, so that the latter can wrap itself on the skirt portion of the internal rotor. Thus, the gear train is driven in rotation by the steering wheel of the vehicle, while the housing is fixed to a fixed part of the vehicle.

Because of the flexible tape, electrical connections are ensured without any momentary or microscopic interruptions, in particular for controlling, in the event of an accident, the inflation of a cushion of the so-called "air bag" type for protecting the driver. It is also possible to sound the horn, control the radio, or perform other manoeuvres with the aid of components located on the steering wheel.

All of the above depends on the application.

The number of ways, or electrical conductors, included in the flexible tape also depends on the application and on the number of items of information which are to be passed between the fixed tube of the steering column and the rotatable steering wheel.

In all cases, a reduction is obtained in the rotary movement of the rotor.

For example, the total displacement of the steering wheel may be limited to five turns (2.5 turns in one direction and 2.5 turns in the other direction from the central, straight ahead, position), and with a reduction ratio of 1/2.5 the rotor can turn through two revolutions.

An object of the present invention is to make use of this reduction in movement.

The object is achieved by the subject-matter of claim 1. Further advantageous embodiments thereof are defined in the dependent claims.

According to the invention, a rotary contactor of the type described in FR-A-2 753 575 is characterised in that the rotor carries, on the side opposite to the device for reducing rotational movement, a component of a sensor which is active over the whole rotation of the rotatable hub (1) and the steering wheel (101) and which detect the absolute angle of rotation of the hub, the measurement of the sensor (7) constituting an item of information to be transmitted to a computer.

Thanks to the invention, the rotor is used for the purpose of measuring the rotation of the steering wheel. This measurement constitutes an item of information which is for example transmitted to a computer that governs the live suspension of the motor vehicle.

In general terms, thanks to the absolute angle sensor in accordance with the invention, an item of information is obtained which can be made use of by a computer with a view to improving the road holding of the vehicle, by, for example, acting on the connections of the vehicle to the ground (such as the suspension, braking system and/or traction).

In addition, thanks to the device for reducing rotational movement, the tape is short, and this enables the length of the tape, and therefore also the cost of the rotary contactor, to be reduced. In addition, thanks to the invention the radial size of the rotary contactor is not increased, and a compact arrangement is obtained.

The rotary contactor includes, in one embodiment, a two-piece housing in which one of the pieces includes a flange that divides the space within the housing into two parts, namely one part containing the rotary contactor proper, and one part containing the absolute angle sensor.

In another version it is the other piece that includes the separating flange.

The hub carries a transverse ring portion which lies generally in the same plane as the flange that divides the space within the housing into two, and the flange surrounds the ring portion with a radial clearance.

The rotor bears on the appropriate face of the hub flange.

The sensor in accordance with the invention comprises two measuring devices.

The first of these, being fixed to the hub, is fixed in rotation to the steering wheel and accordingly measures directly the angle of the steering wheel in relation to its straight-ahead position. It should be noted that this device delivers an angular value within the turn, but that, since the steering wheel does perform a plurality of turns, it is not known which turn the steering wheel is actually in at any particular time.

To this end, a second device is driven by the rotor of the rotary contactor via a passage formed under the rotor.

This second device accordingly measures the angle of rotation of the rotor. Due to the fact that the motion of the latter is reduced, for example in a ratio of 2.5/1 with respect to the steering wheel, it is possible to obtain an absolute measurement of the steering wheel angle over a range of 2.5 turns. However, the total field of rotation of the steering wheel is five turns, that is to say 2.5 turns to the right and 2.5 turns to the left. It is therefore necessary to remove right/left ambiguity in order to obtain an absolute reading of the steering wheel angle over five turns.

To this end, a correlation is effected between the measurement delivered by the first device and that delivered by the second device.

The measuring devices are for example coded discs. In this case, the housing carries receivers for receiving the signals from the coded discs. For example the code may consist of opaque motifs, with the discs being of a material which is translucent or even transparent. With the aid of an emitter, such as a light emitting diode, a light bulb or any other light source, the discs are illuminated selectively, and are for example provided with a prism for guiding the light between its upper face, formed with grooves for transmitting the light, and its lower face on which the code is applied.

The reflected rays are collected with the aid of receptors such as phototransistors.

For example, if the second disc performs a total of two turns, it is considered that the two turns of the second disc divide the rotation (or dynamic) of the hub and therefore of the steering wheel into two zones (or directions), which are respectively Right (i.e. rotation of the steering wheel towards the right) and Left (i.e. rotation of the steering wheel towards the left). Each zone is divided for example into eight sectors.

In one direction of rotation, the codes and the angles of rotation go in an increasing order, and in the other direction of rotation they go in the decreasing order.

At the instant at which the code of the sector of the second disc is read, ambiguity can be removed because of the angle of the steering wheel read by the first disc.

Thus, for a given code of the second measuring device, two fields of distinct angles are associated which do not interfere with each other, so that it is possible to know the direction of rotation of the steering wheel.

Preferably, for a given code, the fields or angles of the steering wheel are widened so as to take account of clearances and mechanical tolerances, and a small separating gap is left, for example 1.5° for a given code between the consecutive values (right-left) of the ranges of angles detected by the first disc.

It is of course possible to increase or decrease the number of sectors on the second disc, according to the application.

This correlation system is more effective to the extent that the reduction ratio is 1.5 or 2.5 or 3.5 or 4.5 etc.

The following description illustrates the invention with reference to the attached drawings, in which:

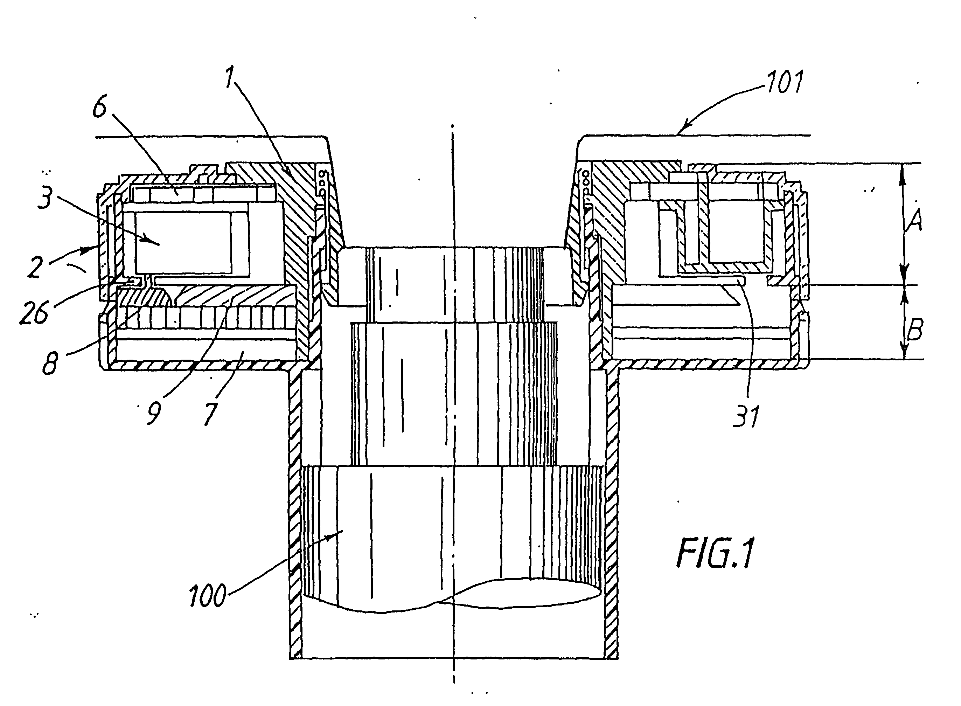

- Figure 1 is a view in cross section of the rotary contactor according to the invention;

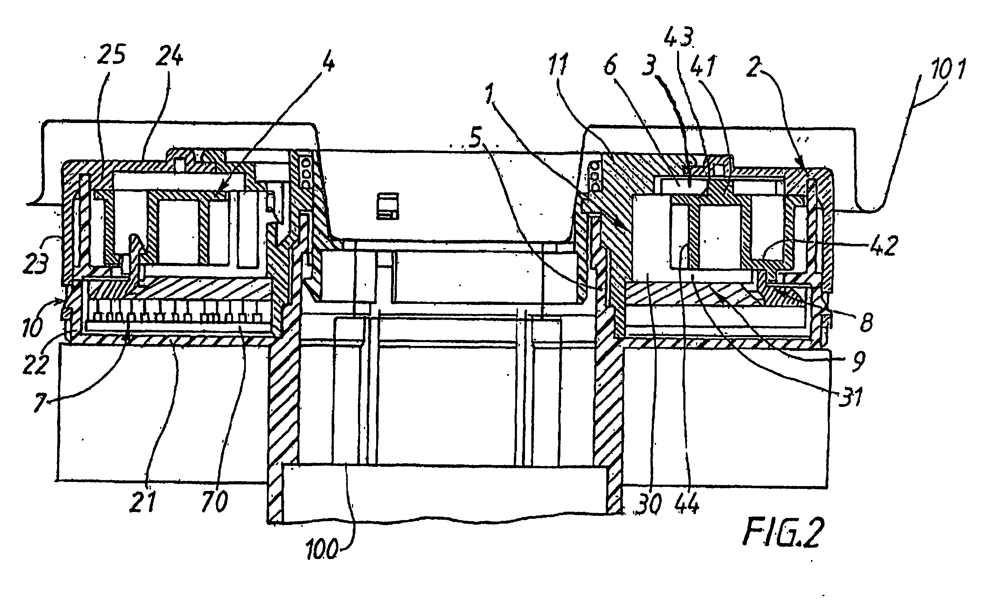

- Figure 2 is a view on a larger scale showing part of the contactor of Figure 1;
- Figure 3 is a view representing the theoretical angles detected by the first disc of the angle sensor, for the same code as the second disc of the angle sensor;
- Figure 4 is a view similar to Figure 3, in which the angles of the first disc, occurring in practice, are shown for the same code of the second disc;
- Figure 5 is a view similar to Figure 2, and shows the light paths as well as the connecting chimneys.

The drawings show a rotary contactor for a motor vehicle, of the same type as that which is described in the document FR-B-2 738 677, to which reference should be made for further detail.

This rotary contactor accordingly comprises, firstly, a flexible electrical connecting tape, and secondly, two coaxial parts which are mounted for angular movement of one with respect to the other.

The tape is attached at one of its ends to one of the coaxial parts, and at its other end to the other coaxial part.

The tape includes for example a plurality of electrical tracks, such as copper tracks, which are applied on a polyester film overlaid with an electrical insulator of the kind known as "Coverlay".

In another version, the tape includes a plurality of electrical wires, which are preferably flat in form and which are parallel and insulated from each other by an electrical insulator enclosing each of the electrical wires.

The number of wires or electrical tracks depends on the application, and in particular on the number of items of information which are to pass between the steering column 100 and the steering wheel 101 of the motor vehicle.

In this example, the rotary contactor ensures electrical connections at least, without any micro-interruptions, between the fixed part of the vehicle, and more precisely a shock sensor carried by the said fixed part, and an inflatable cushion of the so-called "air bag" type carried by the steering wheel of the vehicle so as to protect the driver of the vehicle in the event of an accident.

Other electrical connections can be provided, for example for controlling the radio or the horn from the steering wheel 101.

In the known way, the steering column 100 comprises a fixed tube surrounding a shaft which is driven in rotation by the steering wheel 101 of the vehicle when the latter is operated by the driver. The shaft is connected to the steering system of the vehicle.

The rotary contactor comprises a hub 1 which is arranged to be coupled in rotation to the steering wheel 101 of the vehicle, together with a housing 2 which is arranged to be fixed on a fixed part of the vehicle. The flexible electrical connecting tape is contained within the housing 2, which is part of one of the coaxial parts, in this example the fixed one, while the hub 1 is part of the other coaxial part which in this example is movable angularly, that is to say it is rotatable, and the hub penetrates into the housing 2 which has a central hole, so that the steering column 100, which is of tubular form like the hub 1, extends through the latter.

Preferably the hub 1 and the housing 2 are of mouldable plastics material so as to facilitate their manufacture, reduce costs, noises and corrosion effects. For the same reasons, the rotary contactor has other components of mouldable plastics material, namely a pinion 3, a rotor 4, and a hub extension 30, 31.

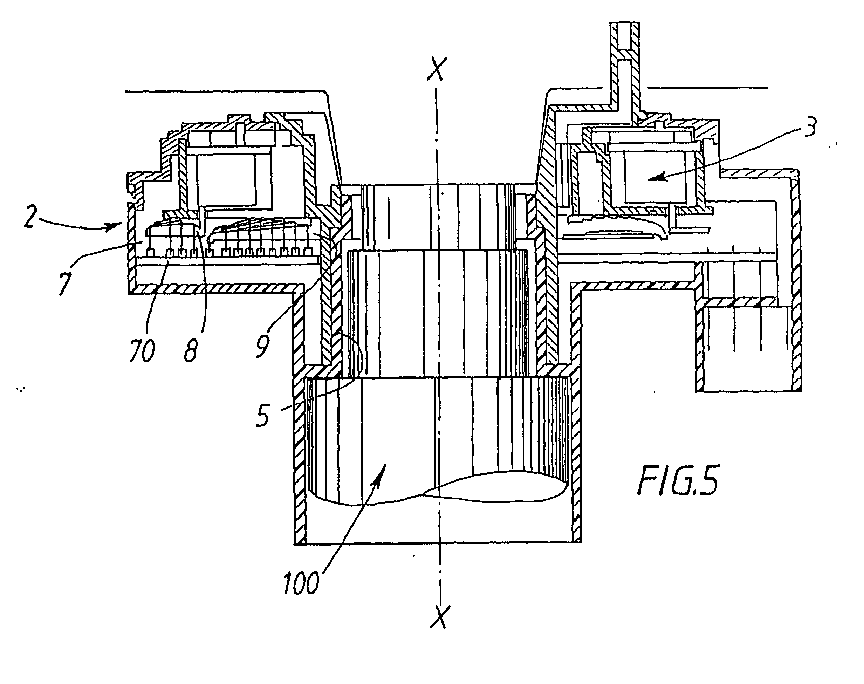

Connecting chimneys, which can be seen in Figure 5, are formed integrally by moulding with the hub 1 and the housing 2 respectively, for fastening of the ends of the flexible tape, which is thus fixed at one of its ends to the hub 1 and at its other end to the housing 2.

As in the document FR-B-2 736 677, the rotor has an axially orientated annular skirt portion 44 with a passage for receiving the short tape, which is arranged to wind on and off, respectively, a hub extension 30, 31 and the skirt portion of the rotor 4, with the passage in the skirt portion 44 enabling the flexible tape to be turned back, being defined for this purpose by rounded portions so as not to damage the tape, which for simplicity is not shown in the drawings.

In accordance with one major feature of the invention, the rotor 4 rotates more slowly than the hub 1. This is achieved by virtue of a device 6 for reducing (or for reduction of) the rotary movement, which will be described below.

As can be seen in the drawings, the hub 1 has a variable thickness, and terminates at one of its ends in a transversely orientated collar portion 11. The hub 1, which is tubular in form, is stepped in diameter internally and externally.

Thus, because of these changes in diameter, the hub 1 has a first external transverse shoulder (not given a reference numeral), and a second external transverse shoulder (not given a reference numeral) close to the collar portion 11, while the first shoulder is radially inward of the second shoulder and is closer to the free end of the hub 1, given that the housing 2 and the hub 1 are of annular form and have an axial axis of symmetry X-X.

Internally, the hub 1 has a third shoulder which is closer to its free end than is the second shoulder.

The housing 2 has a central chimney 5 of tubular form and variable thickness. The chimney 5 is stepped in both its internal and external diameters.

Thus the chimney 5 has transverse shoulders at the changes in diameter. This chimney 5 therefore has a fourth external shoulder (not given a reference numeral) for cooperation with the internal third shoulder of the hub 1.

The outer periphery of the free end of the chimney 5 is in intimate contact with the internal periphery of the hub 1 surrounding the chimney 5, which thus serves for centring the hub 1.

Thanks to the fourth and third shoulders, the hub 1 is located axially on the chimney 5.

The inner periphery of the free end of the hub 1 is in intimate contact with the outer periphery of the chimney 5.

Thus, the chimney 5 has two centring surfaces for the hub 1 which is mounted for rotation on the chimney 5, through which the assembly passes that consists of the steering column 100 and the steering wheel 101.

The annular housing 2 is in two parts, namely a hollow base 21, 22 which is capped by a hollow cover piece 23, 24. Each of these two parts has a respective cylindrical and axially orientated external peripheral skirt portion, 22 and 23 in the base and the cover piece respectively. The skirt portion 22 is longer in the axial direction than the chimney 5, which is formed integrally and centrally by moulding with the base 21, 22.

Each skirt portion 22, 23 is joined to a transverse end wall 21, 24 respectively, these walls having central holes.

More precisely, the transverse wall 21 of the base 21, 22 joins the external skirt portion 21 to the central chimney 5 in such a way that the base 21, 22 has a U-shaped cross section, the branches of which are of different lengths.

It will be noted that here, the chimney 5 is extended beyond the wall 21 by a tubular portion which is part of the switch support member located under the steering wheel 101.

The base 21, 22 projects, in this example being formed by moulding, from the said support member which is fixed on the fixed tube of the steering column 100, given that the rotary switch is mounted at the top of the column 100; the steering wheel 101 is secured at the end of the shaft of the column 100.

In another version, of course, the base 21, 22 has radially projecting and perforated ears for fastening the rotary contactor on the support member that carries the switches, which is located under the steering wheel 101.

The transverse end wall 24 of the cover piece 23, 24 receives the collar portion 11 of the hub 1 within its central hole, and has an annular thickened portion 25 close to its junction with the skirt portion 23. This thickened portion 25 is formed with an annular recess, not given a reference numeral, in which is engaged the free end of the skirt portion 21 of the base 21, 22.

At its free end, the skirt portion 23 of the cover piece has apertures, in each of which there is engaged a lug of sawtooth form, projecting from the skirt portion 21 of the base 21, 22. Snap-fitting means 10, consisting of lugs and apertures, thus exist between the base 21, 22 and the cover piece 23, 24 of the housing 2 for their mutual assembly, which is completed by penetration of the free end of the skirt portion 23 into the recess in the thickened portion 25 of the cover piece 23, 24.

The skirt portion 21 of the base 21, 22 has an internal, annular, transverse flange 26.

The hub 1 carries the hub extension 30, 31 with an axially orientated sleeve portion 30 which is terminated at one of its ends by a transversely orientated annular ring portion 31. This ring portion 31 lies generally in the same plane as the internal flange 26 of the base 21, 22, which, in accordance with one feature, surrounds the ring portion 31 with a radial clearance.

A free radial space exists therefore between the flange 26 and the ring portion. The free end of the hub extension 30, 31 comes into abutment against the first shoulder of the hub 1. The sleeve portion 30 is centred internally by the outer periphery of the hub 1.

Blind cavities, open into the collar portion 11, are arranged in the hub 1. It is thus possible to form apertures in the hub 1 for penetration into them of lugs of the sleeve portion 30. Thus the extension 30, 31 is fixed by snap-fitting on the hub 1 in a manner identical to the fitting of the cover piece 23, 24 on the base 21, 22.

All of these forms are permissible due to the fact that the components 1, 2, 30, 31 are of mouldable plastics material.

It is of course possible to reverse the structures, for example the lugs may be formed on the skirt portion 23 and the apertures on the skirt portion 21 which then surrounds the skirt portion 23. The same is true as regards the lugs and apertures formed on the components 1, 30. In another version, the extension 30, 31 is adhesively bonded on the hub 1, and the cover piece and the base may have flanges in facing relationship with each other for their fastening by riveting, screw fastening etc. The flange 26 may be carried by the cover piece 23, 24.

The sleeve portion 30 enables the flexible tape to be wound and unwound, guided by the ring portion 31, serving for axial abutment of the rotor 4 which is also in axial abutment on the thickened portion 25 and, more precisely, on the transverse face of the latter that faces towards the flange 26.

In accordance with one feature, the rotor 4 is coupled to the hub 1 through a speed reducing device which reduces the number of rotations performed by the rotor with respect to the number of rotations performed by the hub 1.

This device is accordingly a reducing device 6 (or reduction gear) for reducing rotational motion, and consists here of a train of epicyclic gears, including the pinion 3 which is arranged to mesh with an internal set of teeth of the housing 2 and with an external set of teeth on the hub 1.

The rotor 4 carries the pinion 3 for rotation on it. More precisely, the rotor 4 has a cylindrical spigot 41 which projects with respect to its upper transverse wall 43 so as to mount, for rotation on it, the pinion 3 which is in mesh with an internal set of teeth (not shown) formed on the axially orientated internal face of the annular thickened portion 25.

Facing towards this face, the hub 1 has a set of axial external teeth (not given a reference numeral), formed at its outer periphery axially beyond the second shoulder of the hub, which is accordingly bounded by the set of external teeth.

By suitable choice of reduction ratio, the hub 1 may for example perform a total of five revolutions (± 2.5 revolutions from the neutral position - wheels directed straight ahead - referred to as position 0), from a first end stop to a second end stop.

With a reduction ratio of 1/2.5, the rotor will turn 2.5 times less fast than the steering wheel 101 and the hub. This ratio does of course depend on the application.

Thus the rotor will turn through a total of two revolutions from end stop to end stop.

It will be noted that all of this part of the rotary contactor is situated axially between the flange 26 and the transverse end wall 24 of the cover piece 23, 24 of the housing 2. The whole of the rotary contactor is within the upper part A of the annular housing 2 which is bounded by the annular flange 26, surrounding the transverse annular ring portion 31 that also axially bounds the upper part.

The flange 26 bounds axially a lower part B which is also bounded by the transverse wall 22 of the base of the housing 2 and by the ring portion 31.

In accordance with one feature of the invention, an absolute angle sensor 7, which is active over the whole rotation of the hub and steering wheel, is mounted in the lower part B of the housing 2. This angle sensor 7 includes a second component 8 which is fixed to the rotor 4 for rotation with the latter.

It is of course possible to reverse the structures, with the lower part B carrying the rotary contactor proper and the upper part A the angle sensor.

As will have been understood, the device 7 for reducing the rotary motion makes it possible firstly to shorten the flexible tape, which makes a major contribution to the price of the rotary contactor, and secondly, to drive the second component 8 more slowly, so as thus, in this case, to effect a total of two revolutions whereas the hub 1, and therefore the steering wheel 101, effect a total of five revolutions (± 2.5 revolutions in one direction and in the other from the mean position). A first component 9, fixed to the hub 1, is associated with the second component 8, which in this example is in the form of a coded disc.

The first component 9, which is fixed to the hub 1, is fitted in the lower part of the housing 2. This component 9 measures the angle of rotation of the steering wheel 101, and consists of a first coded disc 9 which divides the rotation (the dynamic) of the steering wheel 101 into angles. This first disc is divided into 256 sectors which are coded in an 8-bit Gray code.

In a manner complementary with this first disc, the second disc 8 is driven in rotation by the rotor 4.

The second disc is divided into 8 sectors which are coded in a 3-bit Gray code.

Taken in isolation, reading of the first disc gives the angle of rotation of the steering wheel over one revolution.

Similarly, taken in isolation, reading of the second disc gives the angle of rotation of the steering wheel over 2.5 turns.

The correlation of these two items of information eliminates any ambiguity and enables the absolute angle of rotation to be obtained between - 2.5 and + 2.5 turns.

In another version, by reversal of the structure, the components 8, 9 are fitted in the upper part.

In this example, the second disc 8 is assembled by snap-fitting to the transversely orientated bottom wall 42 of the rotor. This wall 42 is part of a U-shaped portion of the rotor 4 at its outer periphery. The wall 42 constitutes the base of a U, the two axially orientated branches of which are, respectively, in contact with the transverse face of the thickened portion 25 and joined to the transversely orientated top wall 43 which carries the spigot 41. The skirt portion 44 of the rotor, which enables the flexible electrical connection tape to pass through, is formed by moulding to project from this wall 43 which lies radially inwardly of the wall 42.

Thus, a cage is formed for the short flexible tape by the wall 43 and the ring portion 31.

The second disc 8 has an annular, axially orientated lip at its inner periphery. This lip lies in the free space which is bounded by the inner periphery of the flange 26 and the outer periphery of the ring portion 31.

The lip has at its free end notched snap-fitting lugs, each of which extends through an aperture formed in the lower wall 42, which itself has an axially orientated annular lip extending towards the transverse wall 21 for the purpose of centring the lip of the second disc, which is thereby fastened by snap-fitting to the rotor 4 by virtue of its notched snap-fitting lugs engaged in the apertures of the wall 42.

The connecting means penetrating into the said free space, so as to connect the component 8 to the rotor, may of course take some other form, and may for example be suitable for adhesive bonding or welding, for example by ultrasonic welding.

The first disc 9 is attached, for example by adhesive bonding or clipping or welding, to the ring portion 31 of the sleeve 30. The transverse wall 21 of the base 21, 22 of the housing 2 carries a printed circuit 70, which carries emitters and receivers mounted below the discs 8, 9, which in this example are mounted concentrically; the second disc 8 surrounds the first disc 9, and both discs are of a material that conducts light, being translucent in this example and transparent in other versions. Other architectures may be envisaged, for example the discs 8, 9 may be mounted by means of the printed circuit 70 or otherwise.

Figure 5 shows the light paths between the discs 8, 9 and the assembly of emitters and receivers.

The printed circuit 70 is of course connected to a connector carried by the base for transmitting information signals to a computer, which for example governs the active suspension of the vehicle.

The inner periphery of the second disc 8 and the outer periphery of the first disc 9 are bevelled, so as to form prisms which direct the light towards the interior of the discs between the upper and lower transverse faces of the latter.

By giving the upper transverse face of the circular grooves a variable height (Figure 5), it is possible to direct the light downwards, that is to say towards the printed circuit 70. This circuit 70 in this example carries two emitters which are placed facing the bevelled (or chamfered) peripheries of the first disc 9 and the second disc 8 respectively.

Three receivers are positioned in echelon facing the lower transverse face of the second disc 8, while eight receivers are positioned in echelon facing the lower transverse face of the first disc 9, so as to define angular fields.

The depth and angle of the flanks of the grooves are calculated in such a way as to distribute the light uniformly towards the receivers of the discs 8, 9.

The lower transverse faces of the discs 8, 9 carry the "Gray" coding, which is obtained either by screen process printing, lithography, deposits of paint or ink, or by any other method which renders the discs 8, 9 locally opaque, in this example on the lower face of the latter. The discs 8, 9 accordingly carry motifs.

In this example the two emitters are light emitting diodes, and the receivers are phototransistors. In another version, Hall effect sensors can be used, and the coding can be obtained using magnets.

In general terms, the sensor in accordance with the invention carries receivers which constitute detectors activated by the coding system, that is to say the motifs, of the two discs 8, 9.

It is possible to employ as detectors cells of the optical, opto-electronic, magnetic and other types.

It is also possible to make use of potentiometers.

Because of the two discs 8, 9, the two revolutions which are performed as a maximum by the second disc 8 divide the total rotation of the steering wheel into two senses which are Right and Left respectively.

The second disc is divided into eight sectors 1 to 8. The first disc 9 measures the degree (i.e. the angle) of rotation of the steering wheel, via the rotation of the hub 1.

For each sector of the second disc 8, the disc 9 enables the angles of rotation of the steering wheel corresponding to the right and left directions of rotation of the first disc, referred to as theoretical control angles, to be detected.

Thus, for a total rotation of six turns of the steering wheel and two turns of the rotor, readings of the angle in the opposite direction are made with the aid of the first disc, as a function of the direction of rotation.

Therefore, for a given direction of rotation of the hub 1 from its neutral position or 0 position - with steering straight ahead - the angles are read in an increasing order from 0° to 360° in such a way that at the end of one turn of the steering wheel, the angles recommence at zero in increasing order.

In the other direction, the angles from 360° to 0° are read in the decreasing sense so that at the end of one turn of the steering wheel, this recommences at 360°.

For one of the extreme positions of the steering wheel, the second disc is in an extreme or end code.

For the correlations between the angles measured by the first disc 9 and the second disc, reference will be made to the table.

Let us take, for each sector, the steering wheel angles that correspond to the right-hand and left-hand zones. Let us note the corresponding theoretical control angles and report these values in a table.

| Code (2nd disc) | Theoretical control angles | | Direction | Actual control angles (multiples of 1.5°) | |
|---|---|---|---|---|---|
| 1 | 180° | 292.5° | L | 147° | 325.5° |
| | 0° | 112.5° | R | 327° | 145.5° |
| 2 | 292.5° | 45° | L | 259.5° | 78° |
| | 112.5° | 225° | R | 79.5° | 258° |
| 3 | 45° | 157.5° | L | 12° | 190.5° |
| | 225° | 337.5° | R | 192° | 10.5° |
| 4 | 157.5° | 270° | L | 124.5° | 303° |
| | 337.5° | 90° | R | 304.5° | 123° |
| 5 | 270° | 22.5° | L | 237° | 55.5° |
| | 90° | 202.5° | R | 57° | 235.5° |
| 6 | 22.5° | 135° | L | 349.5° | 168° |
| | 202.5° | 315° | R | 169.5° | 348° |
| 7 | 135° | 247.5° | L | 102° | 280.5° |
| | 315° | 67.5° | R | 282° | 100.5° |
| 8 | 247.5° | 360° | L | 214.5° | 33° |
| | 67.5° | 180° | R | 34.5° | 213° |

It will be noted that for each sector considered, there is never any interference between the values of the right hand (R) and left hand (L) angular fields.

Thus, it is seen from the table that, correlating the codes of the two discs 8, 9, for each sector or code of the second disc there is never any interference between the values of the right hand (R) and left hand (L) angular fields of the first disc.

Therefore, because of the correlation in the code of the second disc with the angle of the hub and therefore of the steering wheel, it is possible to determine the sense of rotation, i.e. right or left, of the steering wheel.

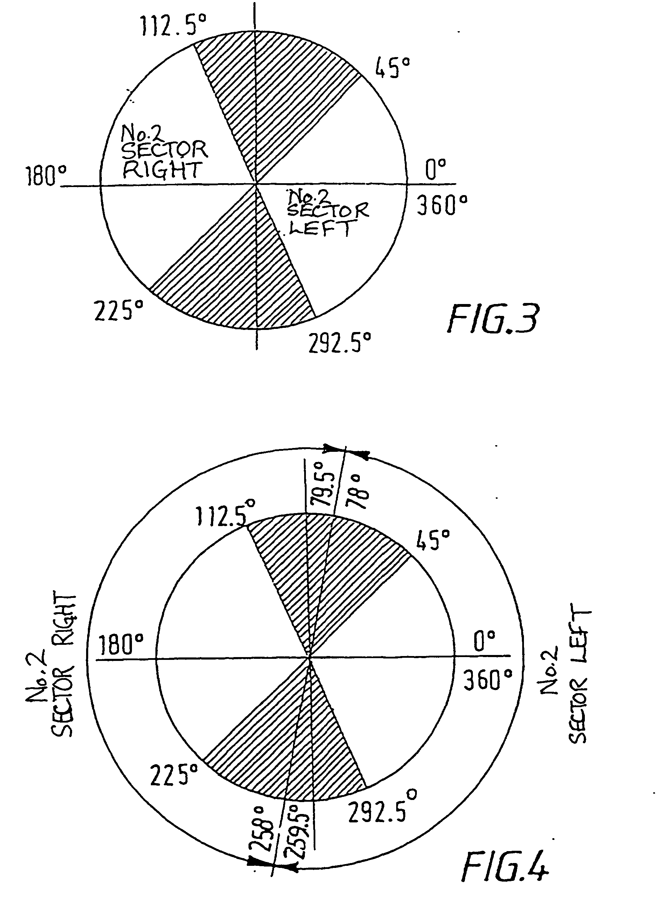

Clearances and mechanical tolerances do of course occur in the rotary contactor, and for this reason the values of the control angles (or fields) are amended, without however giving rise to any detection as regards the direction (i.e right or left) of rotation of the steering wheel. One example is given for code 2 of the second disc with reference to Figures 3 and 4.

Let us for example take the sector code No. 2. In the diagram of Figure 3, the two sectors, right and left, are shown as defined by the angle of the steering wheel at the moment at which the code of the sector is read. These angles are called the theoretical control angles.

The hatched zones are theoretically unexplored by the steering wheel at the moment at which sector code No. 2 is detected. However, because clearances and mechanical tolerances are present it is most desirable to widen the right and left hand sectors, and therefore to amend the values of the control angle, without, in so doing, introducing any ambiguity in the detection of the left and right hand directions.

In fact, the control angles are amended (Figure 4) on either side of the lines bisecting the hatched zones. These new angles are the so-called actual control angles.

A separation of 1.5° is left between consecutive values of the actual control angles.

It is therefore possible to know at any instant, and more particularly while a voltage is being applied to the system, the angle of rotation of the steering wheel from the straight ahead position (by a value lying in the range between - 900° and + 900°).

Calculation of this angle may be carried out in the following manner: θᵣ = f(θᵥ, X).

| Steering wheel angle reading = θᵥ | Steering wheel rotation angle definition = θᵣ |
|---|---|
| Sector code reading = X | if X = 1D or X = 2D or X = 3D |
| if X = 1 | θᵣ = θᵥ |
| if 147° ≤ θᵥ ≤ 325.5° | end of supposition |
| X = 1G | if X = 4D |
| End of supposition | if 304.5° ≤ θᵥ ≤ 360° |
| if 327° ≤ θᵥ ≤ 145.5° | θᵣ = θᵥ |
| X = 1D | end of supposition |
| end of supposition | if 0° ≤ θᵥ ≤ 123° |
| end of supposition | θᵣ = 360 + θᵥ |
| if X = 2 | end of supposition |
| if 79.5° ≤ θᵥ ≤ 258° | end of supposition |
| X = 2D | if X = SD or X = 6D |
| end of supposition | θᵣ = 360 + θᵥ |
| if 259.5° ≤ θᵥ or θᵥ ≤ 78° | end of supposition |
| X = 2G | if X = 7D |
| end of supposition | if 282° ≤ θᵥ ≤ 360° |
| end of supposition | θᵣ = 360 + θᵥ |
| if X = 3 | end of supposition |
| if 12° ≤ θᵥ ≤ 190.5° | if 0° ≤ θᵥ ≤ 100.5° |
| X = 3G | θᵣ = 720 + θᵥ |
| end of supposition | end of supposition |
| if 192° ≤ θᵥ or ≤ θᵥ 10.5° | end of supposition |
| X = 3D | if X = 8D |
| end of supposition | θᵣ = 720 + θᵥ |
| end of supposition | end of supposition |
| if X = 4 | if X = 1G |
| if 124.5° ≤ θᵥ ≤ 303° | θᵣ = 1080 - θᵥ |
| X = 4G | end of supposition |
| end of supposition | if X = 2G |
| if 304.5° ≤ θᵥ or ≤ θᵥ 123° | if 259.5° ≤ θᵥ ≤ 360° |
| X = 4D | θᵣ = 1080 - θᵥ |
| end of supposition | end of supposition |
| end of supposition | if 0° ≤ θᵥ ≤ 78° |
| si X = 5 | θᵣ = 720 - θᵥ |
| if 57° ≤ θᵥ ≤ 235.5° | end of supposition |
| X = 5D | end of supposition |
| end of supposition | if X = 3D or X = 4D |
| if 237° ≤ θᵥ or θᵥ ≤ 55.5° | θᵣ ≤ 720 - θᵥ |
| X = 5G | end of supposition |
| end of supposition | if X = 5G |
| end of supposition | if 237° ≤ θᵥ ≤ 360° |
| si X = 6 | θᵣ = 720 - θᵥ |
| if 169.5° ≤ θᵥ ≤ 348° | end of supposition |
| X = 6D | if 0° ≤ θᵥ ≤ 55.5° |
| end of supposition | θᵣ = 360 - θᵥ |
| if 349.5° ≤ θᵥ or θᵥ ≤ 168° | end of supposition |
| X = 6G | end of supposition |
| end of supposition | if X = 6G or X = 7G or X = 8G |
| end of supposition | θᵣ = 360 - θᵥ |
| if X = 7 | end of supposition |
| if 102° ≤ θᵥ ≤ 280.5° | |
| end of supposition | |
| if 282° ≤ θᵥ or θᵥ ≤ 100.5° | |
| end of supposition | |
| end of supposition | |
| if X = 8 | |
| if 34.5° ≤ θᵥ ≤ 213° | |
| X = 8D | |
| end of supposition | |
| if 214.5° ≤ θᵥ or θᵥ ≤ 33° | |
| X = 8G | |
| end of supposition | |
| end of supposition | |

The present invention is of course not limited to the embodiment described by way of example. In particular, the device 6 for reducing the rotary motion may take some other form.

The motif of the codings may consist of magnets, with the receivers or detectors then being Hall effect sensors. Potentiometers may be used. According to the number of revolutions performed by the second disc, it is possible to vary the number of sectors.

As mentioned, it is of course possible to reverse the structure, with the printed circuits 70 then being carried by the cover piece and the upper faces of the coded discs 8, 9. In this case, the rotor 4 is turned round.

In another version, the first disc 9 is offset axially with respect to the second disc 8.

## Claims

1. A short-tape rotary contactor, for a motor vehicle having a steering wheel (101) and a steering column (100),
comprising two coaxial parts (1, 2) mounted for rotation of one with respect to the other, a flexible tape for electrical transmission, attached at one of its ends to one of the coaxial parts and at its other end to the other coaxial part, wherein one of the coaxial parts comprises a rotatable hub (1) which is adapted to be driven in rotation by the steering wheel (101) of the vehicle, while the other coaxial part comprises a hollow housing (2) which is adapted to be fixed on a fixed part of the vehicle, and in the interior of which the hub (1) penetrates and there are contained, firstly, a rotor (4), and secondly, on one side of the rotor (4) a device for reducing rotational movement which has a skirt portion (44) with a passage for receiving the tape, said device for reducing rotational movement being operatively interposed between the hub (1) and the rotor (4), in order to reduce the number of rotations performed by the rotor (4) with respect to the number of rotations performed by the hub (1), **characterised in that** the rotor (4) carries, on the side opposite to the device (6) for reducing rotational movement, a component (8) of a sensor (7) which is active over the whole rotation of the rotatable hub (1) and the steering wheel (101), and which detects the absolute angle of rotation of the hub (1), the measurement of the sensor (7) constituting an item of information to be transmitted to a computer.

2. A rotary contactor according to Claim 1, **characterised in that** the housing (2) consists of two pieces (21, 22; 23, 24), and **in that** one of the two pieces carries a flange (26) which separates the internal space of the housing (2) into two parts, namely a first part (A) in which the rotary contactor proper is contained, and a second part (B) in which the sensor of absolute angle of rotation of the hub (1) is contained.

3. A rotary contactor according to Claim 2, **characterised in that** the hub (1) carries a transverse ring portion (31) lying generally in the plane of the flange (26) and surrounded by the flange (26).

4. A rotary contactor according to Claim 3, **characterised in that** a radial space exists between the ring portion (31) and the flange (26).

5. A rotary contactor according to Claim 4, **characterised in that** connecting means penetrate into the said space so as to connect the said component (8) of the sensor of absolute angle of rotation of the hub (1) to the rotor (4).

6. A rotary contactor according to Claim 5, **characterised in that** the rotor (4) has a first transverse wall (43) which is connected to the hub (1) by the said device for reducing movement (6), and a second transverse wall (42) which is connected by the connecting means to the said component (8) of the absolute angle sensor.

7. A rotary contactor according to Claim 6, **characterised in that** the first transverse wall (43) carries the skirt portion (44) of the rotor (4) and lies radially inwards of the second wall.

8. A rotary contactor according to any one of Claims 5 to 7, **characterised in that** the connecting means consist of snap-fitting means.

9. A rotary contactor according to Claim 7 or Claim 8, **characterised in that** the first wall carries, for rotation thereon, a pinion (3) meshing with an internal set of teeth of the housing (2) and an external set of teeth of the hub (1), so that the device for reducing rotational movement consists of an epicyclic gear train.

10. A rotary contactor according to any one of Claims 1 to 9, **characterised in that** the component of the absolute angle sensor carried by the rotor (4) consists of a coded disc referred to as the second coded disc.

11. A rotary contactor according to any one of Claims 1 to 10, **characterised in that** the hub (1) carries a further component (9) for measuring the angle of rotation of the steering wheel (101) via the hub (1) and for effecting a correlation with the component (8) carried by the rotor (4), so as to eliminate any ambiguity as to the direction of rotation of the hub (1) and steering wheel (101).

12. A rotary contactor according to Claims 10 and 11, **characterised in that** the component carried by the hub (1) is a coded disc referred to as the first coded disc (9).

13. A rotary contactor according to Claim 12, **characterised in that** the codes of the second disc (8) and the angles measured by the first disc (9) go in an increasing order for one direction of rotation of the steering wheel (101) and hub (1), and in a decreasing order for the other direction of rotation of the steering wheel (101) and hub (1), so that two angular sectors of angle measurement of the first disc (9) correspond to each code of the second disc (8).

14. A rotary contactor according to Claim 13, **characterised in that** the angular sectors are displaced, by being separated through a small angle.

15. A rotary contactor according to any one of Claims 12 to 14, **characterised in that** the two coded discs (8, 9) are of a material which is translucent or even transparent, and are illuminated by a light source carried by a printed circuit (70) fixed to the housing (2).

16. A rotary contactor according to Claim 15, **characterised in that** the printed circuit (70) carries receivers.

17. A rotary contactor according to any one of Claims 12 to 16, **characterised in that** the two coded discs are concentric.

18. A rotary contactor according to Claim 15 or Claim 16, **characterised in that** the two coded discs are disposed on either side of the printed circuit (70).

## Patentansprüche

1. Kurzband-Drehkontaktgeber für ein Kraftfahrzeug mit einem Lenkrad (101) und einer Lenksäule (100), umfassend zwei koaxiale Teile (1,2), die für eine Drehbewegung relativ zueinander montiert sind, ein flexibles Band für eine elektrische Übertragung, das an einem seiner Enden an einem der koaxialen Teile und an seinem andere Ende an dem anderen koaxialen Teil befestigt ist, wobei eines der koaxialen Teile eine drehbare Nabe (1) umfaßt, die durch das Lenkrad (101) des Fahrzeugs in eine Drehbewegung versetzt werden kann, wobei das andere koaxiale Teil ein hohles Gehäuse (2) umfaßt, das an einem ortsfesten Teil des Fahrzeugs befestigt werden kann und in dessen Inneres die Nabe (1) ragt, wobei darin erstens ein Rotor (4) und zweitens an einer Seite des Rotors (4) eine Einrichtung zum Reduzieren der Drehbewegung enthalten sind, die einen Randbereich (44) mit einem Durchgang zum Aufnehmen des Bandes aufweist, wobei die Einrichtung zum Reduzieren der Drehbewegung betriebsmäßig zwischen der Nabe (1) und dem Rotor (4) angeordnet ist, um die Anzahl der Umdrehungen, die der Rotor (4) ausführt, bezüglich der Anzahl der Umdrehungen, welche die Nabe (1) ausführt, zu reduzieren, **dadurch gekennzeichnet, daß** der Rotor (4) an der der Einrichtung (6) zum Reduzieren der Drehbewegung gegenüberliegenden Seite eine Komponente (8) eines Sensors (7) trägt, die während der gesamten Drehung der drehbaren Nabe (1) und des Lenkrads (101) aktiv ist und die den absoluten Drehwinkel der Nabe (1) erfaßt, wobei die Messung des Sensors (7) eine Information darstellt, die an einen Computer zu übertragen ist.

2. Drehkontaktgeber nach Anspruch 1, **dadurch gekennzeichnet, daß** das Gehäuse (2) aus zwei Teilstücken (21, 22, 23, 24) besteht und daß eines der beiden Teilstücke einen Flansch (26) trägt, der den Innenraum des Gehäuses (2) in zwei Teile trennt, nämlich einen ersten Teil (A), in dem der Drehkontaktgeber eigentlich enthalten ist, und einen zweiten Teil (B), in dem der Sensor des absoluten Drehwinkels der Nabe (1) enthalten ist.

3. Drehkontaktgeber nach Anspruch 2, **dadurch gekennzeichnet, daß** die Nabe (1) einen queren Ringabschnitt (31) trägt, der im allgemeinen in der Ebene des Flansches (26) liegt und von dem Flansch (26) umgeben ist.

4. Drehkontaktgeber nach Anspruch 3, **dadurch gekennzeichnet , daß** ein radialer Zwischenraum zwischen dem Ringabschnitt (31) und dem Flansch (26) vorhanden ist.

5. Drehkontaktgeber nach Anspruch 4, **dadurch gekennzeichnet, daß** eine Verbindungseinrichtung in den Zwischenraum ragt, um die Komponente (8) des Sensors des absoluten Drehwinkels der Nabe (1) mit dem Rotor (4) zu verbinden.

6. Drehkontaktgeber nach Anspruch 5, **dadurch gekennzeichnet, daß** der Rotor (4) eine erste Querwand (43), die mit der Nabe (1) durch die Einrichtung zum Reduzieren von Bewegung (6) verbunden ist, und eine zweite Querwand (42) aufweist, die durch die Verbindungseinrichtung mit der Komponente (8) des Sensors des absoluten Drehwinkels verbunden ist.

7. Drehkontaktgeber nach Anspruch 6, **dadurch gekennzeichnet, daß** die erste Querwand (43) den Randabschnitt (44) des Rotors (4) trägt und von der zweiten Wand radial nach innen liegt.

8. Drehkontaktgeber nach einem der Ansprüche 5 bis 7, **dadurch gekennzeichnet, daß** die Verbindungseinnchtung als Einschnappmechanismus ausgebildet ist.

9. Drehkontaktgeber nach Anspruch 7 oder Anspruch 8, **dadurch gekennzeichnet, daß** die erste Wand für eine Drehung daran ein Zahnrad (3) trägt, das mit einem Satz Innenzahne des Gehäuses (2) und einem Satz Außenzähne der Nabe (1) in Eingriff steht, so daß die Einrichtung zum Reduzieren der Drehbewegung aus einem Umlauf-oder Plantetengetriebe besteht.

10. Drehkontaktgeber nach einem der Ansprüche 1 bis 9, **dadurch gekennzeichnet, daß** die von dem Rotor (4) getragene Komponente des Sensors des absoluten Drehwinkels aus einer codierten Scheibe besteht, die als zweite kodierte Scheibe bezeichnet ist.

11. Drehkontaktgeber nach einem der Ansprüche 1 bis 10, **dadurch gekennzeichnet, daß** die Nabe (1) eine weitere Komponente (9) zum Messen des Drehwinkels des Lenkrads (101) über die Nabe (1) und zum Herbeiführen einer Wechselwirkung mit der von dem Rotor (4) getragenen Komponente (8) trägt, um jegliche Unbestimmtheit hinsichtlich der Drehrichtung der Nabe (1) und des Lenkrads (101) zu beseitigen.

12. Drehkontaktgeber nach einem der Ansprüche 10 und 11, **dadurch gekennzeichnet, daß** die von der Nabe (1) getragene Komponente eine codierte Scheibe ist, die als erste codierte Scheibe (9) bezeichnet ist.

13. Drehkontaktgeber nach Anspruch 12, **dadurch gekennzeichnet, daß** die Codes der zweiten Scheibe (8) und die Winkel, die von der ersten Scheibe (9) gemessen sind, in einer Drehrichtung des Lenkrads (101) und der Nabe (1) in Reihe zunehmen und in der anderen Drehrichtung des Lenkrads (101) und der Nabe (1) in Reihe abnehmen, so daß zwei Winkelabschnitte der Winkelmessung der ersten Scheibe (9) jedem Code der zweiten Scheibe (8) entsprechen.

14. Drehkontaktgeber nach Anspruch 13, **dadurch gekennzeichnet, daß** die Winkelabschnitte versetzt sind, indem sie durch einen kleinen Winkel getrennt sind.

15. Drehkontaktgeber nach einem der Ansprüche 12 bis 14, **dadurch gekennzeichnet, daß** die beiden codierten Scheiben (8, 9) aus einem lichtdurchlässigen oder sogar durchsichtigen Material gebildet sind und von einer Lichtquelle beleuchtet sind, die von einer gedruckten Schaltung (70) getragen ist, die an dem Gehäuse (2) befestigt ist.

16. Drehkontaktgeber nach Anspruch 15, **dadurch gekennzeichnet, daß** die gedruckte Schaltung (70) Empfänger trägt.

17. Drehkontaktgeber nach einem der Ansprüche 12 bis 16, **dadurch gekennzeichnet, daß** die beiden codierten Scheiben konzentrisch sind.

18. Drehkontaktgeber nach Anspruch 15 oder 16, **dadurch gekennzeichnet, daß** die beiden codierten Scheiben auf beiden Seiten der gedruckten Schaltung (70) angeordnet sind.

## Revendications

1. Contacteur tournant à ruban court pour véhicule automobile, doté d'un volant (101) et d'une colonne de direction (100), comportant deux parties coaxiales (1,2) montées rotatives l'une par rapport à l'autre, un ruban souple de transmission électrique attelé à l'une de ses extrémités à l'une des parties coaxiales et à l'autre de ses extrémités à l'autre des parties coaxiales, dans lequel l'une des parties coaxiales comporte un moyeu (1) mobile en rotation destiné à être entraîné en rotation par le volant (101) du véhicule et l'autre partie coaxiale un boîtier creux (2) destiné à être fixé sur une partie fixe du véhicule et à l'intérieur duquel se loge, d'une part, le moyeu (1) et un rotor (4) et, d'autre part, d'un côté du rotor (4) un dispositif réducteur de mouvement de rotation intervenant entre le moyeu (1) et le rotor (4) doté d'une portion de jupe (44) avec un passage pour recevoir le ruban, ledit dispositif pour réduire le mouvement de rotation étant opérationnellement interposé entre le moyeu (1) et le rotor (4) pour réduire te nombre de rotations réalisées par le rotor (4) par rapport au nombre de rotations réalisées par le moyeu (1), **caractérisé en ce que** le rotor (4) porte, du côté opposé au dispositif de réduction de mouvement de rotation (6), un composant (8) d'un capteur (7) qui est actif sur toute la rotation du moyeu (1) mobile en rotation et le volant (101), et qui détecte l'angle absolu de rotation du moyen (1), la mesure du capteur (7) constituant une portée d'information destinée à être transmise à un ordinateur.

2. Contacteur tournant selon la revendication 1, **caractérisé en ce que** le boîtier (2) est en deux pièces (21,22-23,24) et **en ce que** l'une des deux pièces porte un voile (26) permettant de séparer l'espace intérieur du boîtier (2) en deux parties à savoir une première partie (A) dans laquelle est logé le contacteur tournant proprement dit et une seconde partie (B) dans laquelle se loge le capteur d'angle absolu de la rotation du moyeu (1).

3. Contacteur tournant selon la revendication 2, **caractérisé en ce que** le moyeu (1) porte un flasque transversal (31) globalement dans le plan du voile (26) et entouré par le voile (26).

4. Contacteur tournant selon la revendication 3, **caractérisé en ce qu'**un espace radial existe entre le flasque (31) et le voile (26).

5. Contacteur tournant selon la revendication 4, **caractérisé en ce que** des moyens de liaison pénètrent dans ledit espace pour relier le composant (8) du capteur d'angle absolu de la rotation du moyeu (1) au rotor (4).

6. Contacteur tournant selon la revendication 5, **caractérisé en ce que** le rotor (4) présente une prenuère paroi transversale (43) reliée par ledit dispositif de réduction de mouvement (6) au moyeu (1) et une deuxième paroi transversale (42) reliée par les moyens de liaison au composant (8) du capteur d'angle absolu.

7. Contacteur tournant selon la revendication 6, **caractérisé en ce que** la première paroi transversale (143) porte la portion de jupe (44) du rotor (4) et s'étend radialement en dessous de la deuxième paroi.

8. Contacteur tournant selon l'une quelconque des revendications 5 à 7, **caractérisé en ce que** les moyens de liaison consistent en des moyens d'encliquetage.

9. Contacteur tournant selon la revendication 7 ou 8, **caractérisé en ce que** la première paroi porte à rotation un pignon (3) engrenant avec une denture mtérieure du boîtier (2) et une denture extérieure du moyeu (1) en sorte que le dispositif de réduction de mouvement de rotation consiste en un train d'engrenages épicycloïdaux.

10. Contacteur tournant selon l'une quelconque des revendications 1 à 9, **caractérisé en ce que** le composant du capteur d'angle absolu porté par le rotor (4) consiste en un disque codé dit deuxième disque codé

11. Contacteur tournant selon l'une quelconque des revendications 1 à 10, **caractérisé en ce que** le moyeu (1) porte un autre composant (9) pour mesurer l'angle de rotation du volant (101) via le moyeu (1) et effectuer une corrélation avec le composant (8) porté par le rotor (4) pour lever toute ambiguné sur le sens de rotation du moyeu (1) et du volant (101).

12. Contacteur tournant selon les revendications 10 et 11, **caractérisé en ce que** le composant porté par le moyeu (1) est un disque codé dit premier disque codé (9).

13. Contacteur tournant selon la revendication 12, **caractérisé en ce que**, pour un sens de rotation du volant (101) et du moyeu (1) les codes du deuxième disque (8) et les angles mesurés par le premier disque (9) vont dans un ordre croissant et dans un ordre décroissant pour l'autre sens de rotation (101) et du moyeu (1) en sorte qu'à chaque code du deuxième disque (8) correspondent deux secteurs angulaires de mesure d'angle du premier disque (9).

14. Contacteur tournant selon la revendication 13, **caractérisé en ce que** les secteurs angulaires sont déplacés en étant séparés par un faible angle.

15. Contacteur tournant selon l'une quelconque des revendications 12 à 14, **caractérisé en ce que** les deux disques codés (8, 9) sont en matière translucide voue transparente et sont éclairés par une source lumineuse portée par un circuit imprimé (70) solidaire du boîtier (2).

16. Contacteur tournant selon la revendication 15, **caractérisé en ce que** le circuit imprimé (70) porte des récepteurs.

17. Contacteur tournant selon l'une quelconque des revendications 12 à 16, **caractérisé en ce que** les deux disques codés sont concentriques.

18. Contacteur tournant selon la revendication 15 ou 16, **caractérisé en ce que** les deux disques codés sont disposés de part et d'autre du circuit imprimé (70).
